# FASCICULE DE BREVET EUROPEEN

(11) **EP 0 390 657 B1**
(45) Date de publication et mention de la délivrance du brevet: **29.12.1993**
(21) Numéro de dépôt: 90400806.7
(22) Date de dépôt: 23.03.1990
(51) Int. Cl.: G01S 7/40

(54) **Mesure de la stabilité en émission-réception d'un radar**
Messung der Sende-Empfangsstabilität in einem Radargerät
Measurement of the stability of transmission and reception in radar

(30) Priorité: 31.03.1989 FR 8904253
(43) Date de publication de la demande: 03.10.1990
(73) Titulaire: THOMSON-CSF, 75008 Paris (FR)
(72) Inventeur: Peyrat, André, F-92045 Paris La Défense (FR)
(74) Mandataire: Albert, Claude

(56) Documents cités:
- CH-A- 664 021
- US-A- 3 950 750
- US-A- 4 003 054

## Description

La présente invention a trait aux techniques radar. Elle concerne plus particulièrement les radars implantés au sol et utilisés pour la détection et la poursuite de cibles mobiles de toute nature telles que par exemple les aéronefs en vol, en particulier pour la surveillance d'approche des aéroports.

L'invention s'applique à tout système radar de repérage de cibles mobiles dans lequel les cibles mobiles a priori utiles et les cibles fixes a priori non utiles sont différenciées en utilisant les variations en amplitude et en phase du signal reçu sur plusieurs récurrences impulsionnelles successives du radar. Dans de tels radars, la distinction entre cibles mobiles et cibles fixes dans un suppresseur de cible fixe en sortie du récepteur du radar est limitée par les variations en amplitude et en phase du signal causées par le radar lui-même, aussi bien dans les circuits d'émission que dans les circuits de réception du radar.

Les variations en amplitude et en phase du signal reçu sont déjà utilisées depuis au moins 1950 pour discriminer les cibles mobiles par rapport aux cibles fixes. A ce sujet, on pourra utilement se reporter au livre "Radar Handbook" de Merril I. SKOLNIK, Ed. Mc GRAW-HILL et en particulier au chapitre 17 de William W. SHRADER, pages 17-2 à 17-50. Très tôt les spécialistes ont découvert qu'une telle technique imposait à l'ensemble émetteur-récepteur du radar une stabilité en amplitude et en phase compatible avec les performances d'ensemble recherchées. Cette stabilité en émission et réception est donc rapidement devenue l'une des caractéristiques techniques majeures de l'ensemble émetteur-récepteur de ce type de radars, appelés radars "cohérents" ou "cohérés" suivant leur composition, et les spécialistes se sont donc attachés à la spécifier et à la mesurer.

Des méthodes de mesure appropriées ont été trouvées et des appareils spéciaux ont été construits pour effectuer ce genre de mesure.

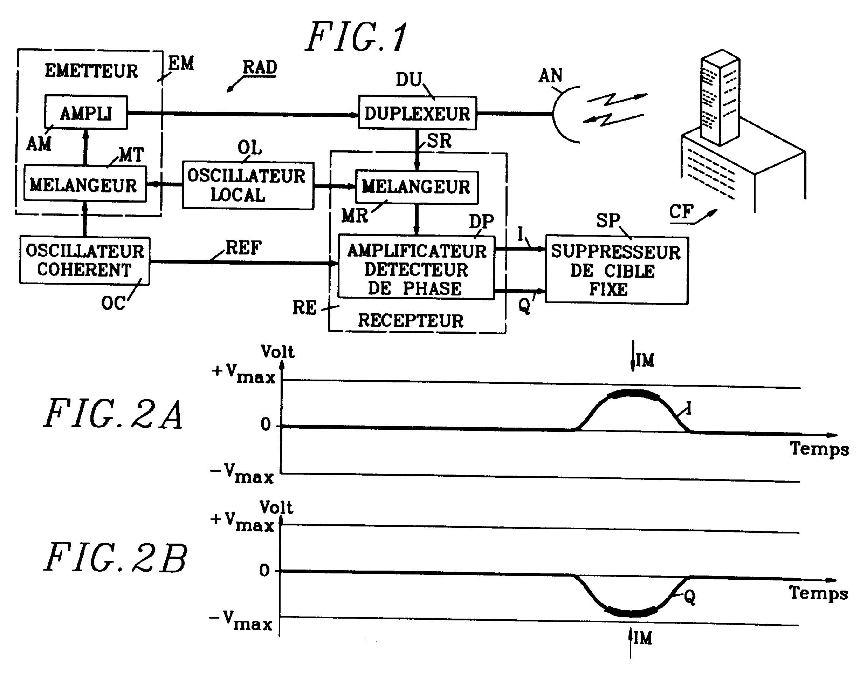

La méthode actuellement la plus employée consiste à mettre en mémoire sous forme numérique deux tensions vidéo I et Q du récepteur en présence d'une cible fixe. L'une, I, des tensions est dite tension vidéo de phase, et l'autre tension Q est dite tension vidéo en quadrature. La cible fixe est soit réelle, soit simulée par injection dans le récepteur d'un échantillon retardé ou non retardé du signal émis (cf. Fig. 1). Le radar émettant avec la fréquence de renouvellement spécifiée, on constitue ainsi une suite de couples (I, Q). Chaque couple (I, Q) est converti en deux mots d'échantillons numériques ayant chacun un nombre de bits correspondant aux convertisseurs analogiques-numériques utilisés, qui sont en général ceux inclus dans le suppresseur du radar lui-même. Les variations observées sur les échantillons successifs représentent l'instabilité mesurée et sont analysées, soit dans le domaine temporel selon un calcul de moyennes et d'écarts-types, soit dans le domaine fréquentiel selon un calcul par transformée de Fourier et analyse du spectre obtenu.

Le calcul par transformée de Fourier est en général préféré parce que ses résultats sont d'interprétation directe et commode dans le cas de plus en plus fréquent des radars modernes traitant les signaux reçus par banc de filtres Doppler.

La mesure de la stabilité en émission-réception d'un radar est une opération difficile puisqu'elle impose la mesure de faibles variations sur un signal de tension ayant une amplitude élevée. Les appareils utilisés pour la mesure ont été améliorés ces dernières années pour les rendre compatibles avec les performances accrues des radars en matière de stabilité.

Actuellement, il est demandé des stabilités telles que les appareils de mesure utilisés jusqu'à présent n'offrent pas les qualité et précision requises pour effectuer la mesure avec une marge suffisante entre la valeur du paramètre à mesurer et les défauts introduits par l'appareil de mesure lui-même.

En particulier, les deux convertisseurs analogiques-numériques utilisés dans la plupart des radars et recevant les deux signaux de tension vidéo I et Q présentent une dynamique de codage limitée par le nombre de bits significatifs en sortie. Ce nombre de bits est lui-même limité par des considérations de coût et de faisabilité technique et technologique.

Le nombre de bits significatifs des convertisseurs analogiques-numériques couramment utilisés est actuellement égal à 12 bits ce qui correspond à 2¹²=4096 niveaux de tension entre des tensions limites -V_{MAX} et +V_{MAX} sur chacune des deux voies de tension I et Q. Il est admis que pour coder correctement le bruit et d'autres signaux faibles, ceux-ci doivent occuper au minimum trois ou quatre niveaux de codage de part et d'autre du zéro. Il en résulte une dynamique de mesure de l'ordre de 4096 divisé par 2x3=6 ou 2x4=8, soit en décibels : 20 log (4096/(6 ou 8)) = 54 ou 57 dB.

Cette dynamique est insuffisante pour mesurer des stabilités de système radar de l'ordre de -60 dB ou mieux, et encore plus insuffisante pour mesurer les contributions partielles qui en découlent, de -65 à -70 dB.

Une solution connue à ce problème de mesure consiste à faire appel à des convertisseurs analogiques-numériques ayant un plus grand nombre de bits. Cette élévation du nombre de bits augmente la dynamique de mesure au détriment du coût du système de mesure, en particulier lorsqu'un exemplaire du système de mesure est à fournir avec chaque radar livré, ou lorsque le système de mesure doit être intégré au radar lui-même.

La présente invention vise donc à fournir un procédé et un système de mesure de la stabilité en émission-réception d'un radar remédiant aux inconvénients précédents de la technique antérieure, et en particulier offrant des qualité et précision de mesure nettement meilleures tout en utilisant des convertisseurs analogiques-numériques à faible nombre de bits.

A cette fin, le procédé selon l'invention pour mesurer la stabilité d'amplitude et de phase en émission-réception d'un radar comprenant une première étape au cours de laquelle des signaux de tension sortant du détecteur de phase du récepteur du radar sont mesurés à des instants donnés où lesdits signaux sont susceptibles de subir des fluctuations, lesdits signaux étant issus d'un signal réfléchi par une cible fixe et reçu par le radar, est caractérisé en ce que le procédé comprend une seconde étape au cours de laquelle un signal supplémentaire de phase et d'amplitude préajustées afin de sensiblement annuler auxdits instants donnés les parties stables des signaux de tension est superposé audit signal reçu, en amont du détecteur de phase du récepteur, et une troisiéme étape de mesure les fluctuations des signaux de tension ainsi obtenus auxdits instants donnés.

Un système de mesure pour la mise en oeuvre du procédé selon l'invention pour lequel le radar comprend un récepteur de signal reçu produisant deux signaux de tension vidéo en quadrature vers un suppresseur numérique de cible fixe et vers des moyens de conversion analogique-numérique et des moyens de mesure desdits signaux de tension inclus dans ledit système, est caractérisé en ce qu'il comprend des moyens de production et des moyens de réglage d'amplitude et de phase connectés à la suite des moyens de production pour produire le signal supplémentaire au cours de la seconde étape, et des moyens pour appliquer ledit signal supplémentaire à une entrée de signal reçu du récepteur radar.

D'autres avantages et caractéristiques de l'invention apparaîtront plus clairement à la lecture de la description suivante en référence aux dessins annexés correspondants dans lesquels :
- la Fig. 1 est un bloc-diagramme schématique d'un radar connu à amplification de puissance ;
- les Figs. 2A et 2B montrent deux signaux avec fluctuations sortant d'un détecteur de phase du récepteur du radar de la Fig. 1 ;
- la Fig. 3 montre schématiquement un système de mesure de stabilité du radar selon l'invention ;
- les Figs. 4A et 4B montrent deux signaux avec fluctuations sortant du détecteur de phase du radar après injection d'un signal supplémentaire par le système de mesure ;
- la Fig. 5 est un bloc-diagramme schématique d'une réalisation pratique du système de mesure pour le radar de la Fig. 1 ;
- les Figs. 6A et 6B montrent deux signaux sortant du 3G détecteur de phase au cours d'une première étape du procédé de mesure selon l'invention ; et
- les Figs. 7A et 7B montrent deux signaux sortant du détecteur de phase au cours d'une seconde étape du procédé de mesure selon l'invention.

En référence à la Fig. 1, on retrouve les principaux composants d'un radar cohérent connu RAD du type à amplificateur de puissance. Le radar RAD comprend essentiellement un émetteur d'impulsions récurrentes EM, un récepteur d'impulsions récurrentes RE, un duplexeur DU interconnecté entre une sortie de l'émetteur EM et une entrée du récepteur RE et desservant une antenne AN, et deux oscillateurs OL et OC.

Le premier oscillateur OL est un oscillateur local stabilisé transmettant des impulsions à radiofréquence vers deux mélangeurs MT et MR respectivement inclus dans l'émetteur EM et le récepteur RE.

Dans l'émetteur EM, le mélangeur MT reçoit par une seconde entrée des impulsions du second oscillateur OC qui constitue un oscillateur cohérent à fréquence intermédiaire produisant des impulsions utilisées comme phase de référence dans le récepteur RE. Le mélangeur MT transmet des trains récurrents d'impulsions à radiofréquence qui sont amplifiées par un amplificateur AM et transmises par l'antenne AN à travers le duplexeur DU.

En réception, le signal impulsionnel SR reçu à travers l'antenne AN et le duplexeur DU, suite à la réflexion des impulsions transmises sur des cibles, est mélangé avec les impulsions issues de l'oscillateur local OL dans le mélangeur MR pour être transposé à la fréquence intermédiaire. Puis dans le récepteur RE, le signal reçu à fréquence intermédiaire est appliqué à une entrée d'amplification d'un détecteur de phase DP relié par une seconde entrée à l'oscillateur cohérent OC. Le détecteur de phase DP compare les phases du signal reçu SR avec le signal de référence REF produit par l'oscillateur OC afin de transmettre un signal de sortie qui est fonction de la phase relative entre le signal reçu et le signal de référence et de l'amplitude du signal reçu.

Le détecteur de phase est ensuite relié à un suppresseur de cible fixe SP destiné à éliminer les échos provenant des cibles fixes pour ne visualiser sur l'écran du radar que les échos des cibles mobiles. Dans la réalisation la plus simple, le suppresseur SP mémorise dans une ligne à retard les trains récurrents d'impulsion du signal reçu à chaque intervalle d'émission, et les compare deux-à-deux dans un soustracteur. Lorsque deux trains successifs sont égaux, le signal sortant du soustracteur est nul et correspond à une cible fixe. Au contraire, pour une cible mobile, les trains d'impulsions reçus ont leur phase relative modifiée, en raison du déplacement de la cible mobile, et le signal sortant du soustracteur n'est pas nul et indique une cible mobile.

En pratique, lorsque des techniques numériques sont utilisées dans le suppresseur, le détecteur de phase DP comporte deux voies de sortie I et Q transmettant des signaux analogiques vidéo en quadrature à deux convertisseurs analogiques-numériques en entrée du suppresseur SP. Comme déjà dit, l'invention se réfère à ce type de radar à suppresseur numérique.

Les signaux vidéo I et Q lorsque l'antenne est dirigée sur une cible fixe CF, tel qu'un bâtiment, sont montrés aux Figs. 2A et 2B. Dans ces deux figures, comme dans les figures suivantes 4A et 4B, on a représenté en superposition les fluctuations de chacun des signaux vidéo I et Q pour divers trains reçus récurrents. Les fluctuations sont fortement exagérées pour les besoins de leur représentation par rapport aux limites de tension V_{MAX} et -V_{MAX} des signaux I et Q. Ces fluctuations à mesurer selon l'invention sont principalement dues aux instabilités des circuits d'émission et des circuits de réception du radar. Il apparaît dans les Figs. 2A et 2B que l'amplitude des signaux I et Q est limitée par les niveaux crêtes V_{MAX} et -V_{MAX} en sortie du détecteur de phase DP.

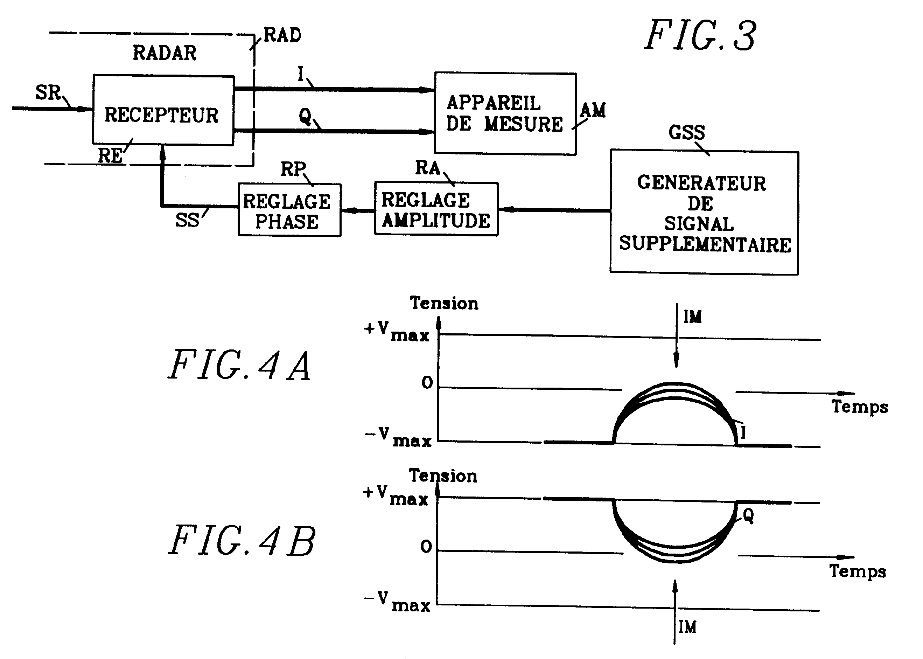

Selon l'invention, pour mesurer les fluctuations des signaux I et Q est utilisé un appareil de mesure AM recevant les signaux I et Q du détecteur de phase DP du récepteur RE, et des moyens pour injecter dans le récepteur RE un signal supplémentaire prédéterminé SS. Comme montré schématiquement à la Fig. 3, les moyens pour injecter comprennent un générateur de signal supplémentaire GSS qui applique le signal supplémentaire au récepteur de radar RE à travers un circuit de réglage d'amplitude RA et un circuit de réglage de phase RP en série.

L'amplitude et la phase du signal supplémentaire sont réglées de sorte que le signal supplémentaire SS annule sensiblement les parties stables dans les signaux I et Q tout en laissant intactes leurs fluctuations de récurrence à récurrence, par superposition du signal supplémentaire SS au signal reçu SR. Dans ces conditions, comme montré aux Figs. 4A et 4B, la superposition de signaux provoque un évanouissement, ou tout au moins une diminution significative du niveau des signaux de tension en quadrature I et Q aux instants significatifs IM où s'effectuent les mesures dans l'appareil AM.

Le signal supplémentaire SS produit par le générateur GSS peut être un signal impulsionnel ou entretenu à la fréquence intermédiaire ou à la fréquence d'émission du radar.

Ainsi, les fluctuations des signaux I et Q avoisinent la tension nulle, comme montré aux Figs. 4A et 4B et ne sont plus limitées par les tensions crêtes limites V_{MAX} et -V_{MAX}.

Chaque signal de sortie I, Q du récepteur RE peut être ainsi amplifié à volonté, tout en restant dans la dynamique admise par l'appareil de mesure AM, en particulier celle admise par deux convertisseurs analogiques-numériques inclus dans celui-ci. Les défauts introduits par l'appareil de mesure lui-même deviennent petits par rapport aux signaux mesurés, ces derniers ayant été amplifiés.

De cette manière, la mesure de la grandeur physique elle-même, telle que tension, est séparée de celle de ses variations. Comme le signal supplémentaire SS utilisé est très stable de récurrence à récurrence, il n'introduit pas d'instabilités supplémentaires et il conserve intactes les fluctuations constituant le signal parasite que l'on cherche à mesurer.

Le procédé selon l'invention écarte la nécessité d'avoir à mesurer des petites fluctuations d'une grandeur physique en présence de celle-ci. La grandeur physique est ici une tension mesurée simultanément en deux points, tels que sortie I et sortie Q du récepteur radar RE. Les fluctuations de ces tensions au cours de plusieurs récurrences radar donnent accès au paramètre que l'on cherche à mesurer.

Selon la technique antérieure, le fait de mesurer simultanément les tensions et leurs variations présente les difficultés déjà exposées.

Le procédé de l'invention suppose la mesure de la valeur des tensions I et Q au cours d'une première étape, puis le réglage de l'amplitude et de la phase du signal supplémentaire SS et la mesure des variations des tensions correspondantes I et Q au cours d'une seconde étape. Aussi le signal à mesurer est appliqué à l'appareil de mesure avec un niveau suffisant pour que la précision et la reproductibilité de la mesure soient bonnes. Il est seulement nécessaire de veiller lors des réglages à ce que les fluctuations demeurent dans la gamme des tensions admissibles en entrée de l'appareil de mesure AM.

Le procédé de l'invention est simple et peu coûteux. Il se prête aussi bien à une mise en oeuvre manuelle, suffisante dans la plupart des cas, qu'à une mise en oeuvre automatisée.

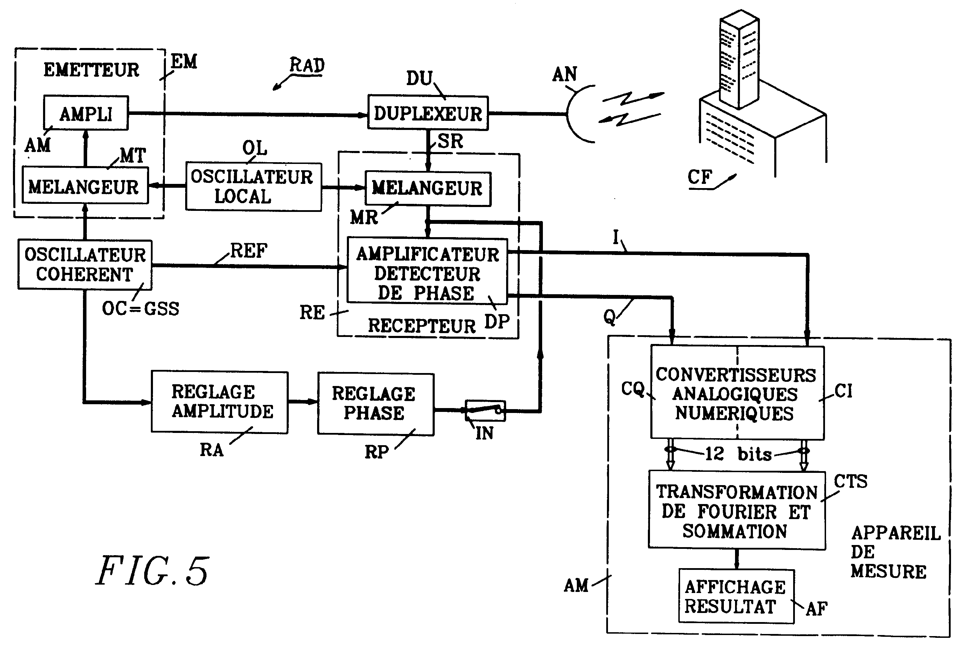

Selon une réalisation préférée montrée à la Fig. 5, le signal supplémentaire est un signal entretenu SS à la fréquence intermédiaire. Dans ce cas, le générateur GSS est constitué par l'oscillateur cohérent OC du radar EAD lui-même. Les circuits de réglage d'amplitude et de phase RA et RP sont connectés en série avec un interrupteur IN entre une sortie de l'oscillateur OC et l'entrée d'amplification du détecteur de phase DP.

Comme montré également à la Fig. 5, l'appareil de mesure AM comprend deux convertisseurs analogiques-numériques CI et CQ recevant les signaux vidéo analogiques I et Q du détecteur de phase DP. Chaque convertisseur CI, CQ échantillonne aux instants significatifs de mesure les signaux I et Q en des mots à 12 bits. Puis dans l'appareil de mesure AM, les variations entre échantillons sont analysées fréquentiellement en subissant une transformation de Fourier à 128 points et une sommation en puissance des 127 raies fréquentielles obtenues à fréquence non nulle grâce à un circuit de transformation et sommation CTS. Le résultat de la mesure en décibel est affiché dans un dispositif d'affichage adéquat AF.

La mesure est faite par exemple sur une cible fixe réelle CF, l'antenne AN du radar ayant été immobilisée dans la direction de la cible fixe utilisée. Les tensions vidéo I et Q présentes en sortie du détecteur de phase DP inclus dans le récepteur radar RE à l'instant correspondant à la distance de ladite cible fixe représentent l'écho de retour de celle-ci.

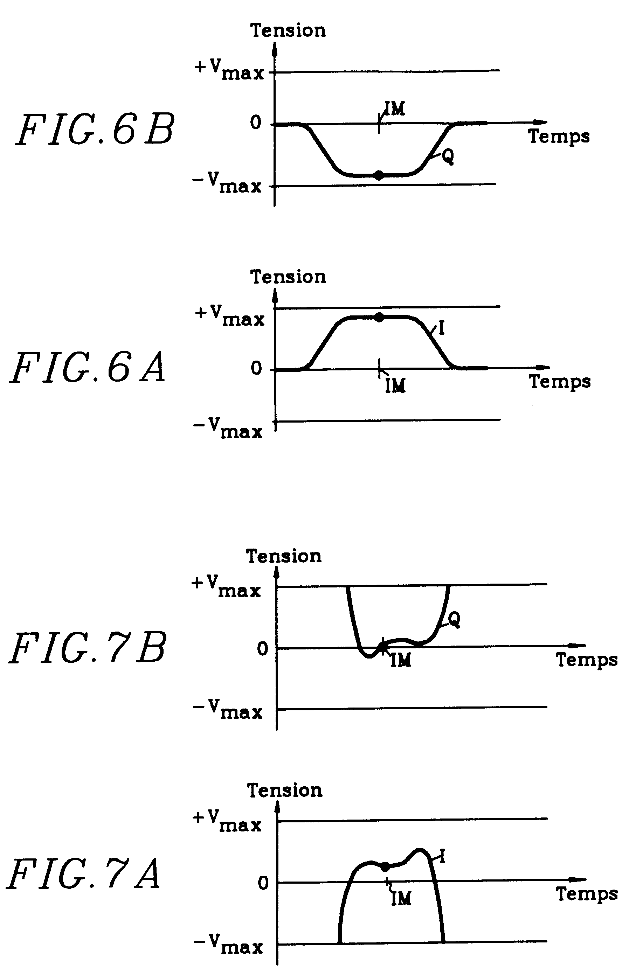

Au cours d'une première étape, l'interrupteur IN est ouvert et le récepteur RE du radar fonctionne comme selon la Fig. 1. Toutefois, le gain d'amplification du récepteur est ajusté de telle sorte que les tensions I et Q ne subissent sensiblement, quelles que soient leurs fluctuations, ni saturation ni limitation dans le récepteur, ce qui permet leur mesure par l'appareil AM. Les tensions mesurées I et Q au cours de cette première étape représentent le signal dit "utile", comme montré aux Figs. 6A et 6B.

Au cours d'une seconde étape, le gain du récepteur RE est augmenté de x dB. La valeur de x n'est pas critique et elle est choisie à la discrétion de l'opérateur. L'interrupteur IN est alors fermé, comme montré à la Fig. 5. Une partie du signal à fréquence intermédiaire produit par l'oscillateur OC est injectée, en tant que signal supplémentaire SS, à l'entrée d'amplification du récepteur, après réglage convenable de l'amplitude et de la phase du signal SS dans les circuits RA et RP, de manière à provoquer une quasi-annulation des tensions I et Q aux instants IM où la mesure est faite. En pratique, ces réglages de phase et d'amplitude confèrent au signal supplémentaire une phase sensiblement en opposition avec le signal reçu SR et une amplitude sensiblement égale à celle du signal reçu.

L'appareil AM mesure la puissance du signal parasite correspondant aux fluctuations des tensions I et Q. La mesure est faite ainsi sur un signal parasite amplifié de x dB. Pour obtenir le rapport entre la puissance du signal parasite et celle du signal utile, il suffit avant de calculer le rapport des mesures, de diminuer de x dB le résultat de la mesure du signal parasite ou, ce qui revient au même, d'augmenter de x dB le résultat de la mesure du signal utile.

La mise en oeuvre du procédé selon l'invention permet, selon cette réalisation préférée, d'obtenir une capacité de mesure de la stabilité en émission-réception du radar à un niveau spécifié de -60 dB, avec une bonne précision sans utiliser un appareil de mesure spécialisé. Le procédé de l'invention, en relâchant les contraintes de précision requises, telles que celles sur la conversion analogique-numérique, permet de faire la mesure avec les fonctions normales du radar. Il en résulte une réduction significative du coût de l'ensemble du système, sans en diminuer les performances.

## Revendications

1. Procédé pour mesurer la stabilité d'amplitude et de phase en émission-réception d'un radar (PAD) comprenant une première étape au cours de laquelle des signaux de tension (I, Q) sortant du détecteur de phase (DP) du récepteur du radar (RE) sont mesurés à des instants donnés (IM) où lesdits signaux sont susceptibles de subir des fluctuations, lesdits signaux étant issus d'un signal réfléchi par une cible fixe (CF) et reçu par le radar, caractérisé en ce que le procédé comprend une seconde étape au cours de laquelle un signal supplémentaire (SS) de phase et d'amplitude préajustées afin de sensiblement annuler auxdits instants donnés les parties stables des signaux de tension (I, Q) est superposé audit signal reçu (SR), en amont du détecteur de phase du récepteur (RE), et une troisième étape de mesure des fluctuations des signaux de tension ainsi obtenus auxdits instants donnés (IM).

2. Procédé conforme à la revendication 1, caractérisé en ce que le signal supplémentaire (SS) est un signal impulsionnel ou entretenu, à la fréquence intermédiaire du radar ou à la fréquence d'émission du radar.

3. Procédé conforme à la revendication 1 ou 2, caractérisé en ce que, au cours de la première étape, le gain d'amplification du récepteur du radar (RE) est réglé afin que lesdits signaux de tension ne subissent aucune limitation en tension.

4. Procédé conforme à l'une quelconque des revendications 1 à 3, caractérisé en ce que les mesures de signaux de tension (I, Q) au cours des première et seconde étapes et leur exploitation sont effectuées dans le domaine temporel ou dans le domaine fréquentiel.

5. Système de mesure de la stabilité en émission-réception d'un radar pour la mise en oeuvre du procédé selon l'une quelconque des revendications 1 à 4, ledit radar comprenant un récepteur de signal reçu (RE) produisant deux signaux de tension vidéo en quadrature (I, Q) vers un suppresseur numérique de cible fixe (SP) et vers des moyens de conversion analogique-numérique (CI, CQ) et des moyens de mesure desdits signaux de tension inclus dans le système, caractérisé en ce qu'il comprend des moyens de production (GSS) et des moyens de réglage d'amplitude et de phase (PA, RP) connectés à la suite des moyens de production pour produire le signal supplémentaire (SS) au cours de la seconde étape, et des moyens pour appliquer ledit signal supplémentaire à une entrée de signal reçu (SR) du récepteur radar (RE).

6. Système conforme à la revendication 5, caractérisé en ce que les moyens de production (GSS) sont constitués par un oscillateur cohérent à fréquence intermédiaire (OC) inclus dans le radar et servant de référence de phase (REF) au détecteur de phase (DP), et en ce que les moyens de réglage d'amplitude et de phase (RA, RP) sont reliés à une entrée d'amplification du détecteur de phase (DP), de préférence à travers un interrupteur (IN).

7. Système conforme à la revendication 5 ou 6, caractérisé en ce que les moyens de conversion sont deux convertisseurs analogiques-numériques (CI, CQ) recevant respectivement les signaux de tension vidéo (I, Q).

8. Système conforme à l'une quelconque des revendications 5 à 7, caractérisé en ce les moyens de mesure comprennent des moyens d'analyse (CTS) reliés aux moyens de conversion (CI, CQ) pour analyser dans le domaine fréquentiel les signaux numériques issus desdits signaux de tension vidéo.

## Patentansprüche

1. Verfahren zur Messung der Amplituden- und Phasenstabilität im Sende-Empfangsteil eines Radargeräts (RAD), mit einem ersten Verfahrensschritt, in dem Spannungssignale (I, Q) am Ausgang des Phasendetektors (DP) des Radarempfängers (RE) zu gegebenen Zeitpunkten (IM) gemessen werden, an denen diese Signale Fluktuationen unterliegen können, wobei diese Signale von einem an einem Festziel (CF) reflektierten und im Radargerät empfangenen Signal stammen, dadurch gekennzeichnet, daß das Verfahren einen zweiten Verfahrensschritt enthält, bei dem ein zusätzliches Signal (SS) mit so voreingestellten Phasen- und Amplitudenwerten dem Empfangssignal (SR) vor dem Phasendetektor des Empfängers (RE) überlagert wird, daß die stabilen Anteile der Spannungssignale (I, Q) zu den gegebenen Zeitpunkten im wesentlichen zu Null werden, und einen dritten Verfahrensschritt, in dem die Fluktuationen der so während der gegebenen Zeitpunkte (IM) erhaltenen Spannungssignale gemessen werden.

2. Verfahren nach Anspruch 1, dadurch gekennzeichnet, daß das zusätzliche Signal (SS) ein Impulssignal oder ein unterhaltenes Signal im Zwischenfrequenzband des Radargeräts oder im Sendefrequenzband des Radargeräts ist.

3. Verfahren nach Anspruch 1 oder 2, dadurch gekennzeichnet, daß während des ersten Verfahrensschritts der Verstärkungsgrad des Radarempfängers (RE) so eingeregelt wird, daß die Spannungssignale keine Spannungsbegrenzung erfahren.

4. Verfahren nach einem beliebigen der Ansprüche 1 bis 3, dadurch gekennzeichnet, daß die Messungen der Spannungssignale (I, Q) während des ersten und zweiten Verfahrensschritts und ihre Auswertung im zeitlichen Bereich oder im Frequenzbereich erfolgen.

5. System zur Messung der Stabilität des Sende- und Empfangsteils eines Radargeräts zur Durchführung des Verfahrens nach einem beliebigen der Ansprüche 1 bis 4, wobei das Radargerät einen Empfänger für das Empfangssignal (RE), der zwei Videospannungen in Quadratur (I, Q) an eine digitale Festzielunterdrückungsschaltung (SP) und an Analog-Digital-Wandlermittel (CI, CQ) liefert, sowie Mittel zur Messung der Spannungssignale enthält, die sich in dem System befinden, dadurch gekennzeichnet, daß es Mittel (GSS) zur Erzeugung des zusätzlichen Signals (SS) und Mittel zur Regelung von Amplitude und Phase (RA, RP), die hinter den Mitteln zur Erzeugung des zusätzlichen Signals während des zweiten Verfahrensschritts liegen, und Mittel aufweist, um das zusätzliche Signal an einen Eingang für das Empfangssignal (SR) des Radarempfängers (RE) anzulegen.

6. System nach Anspruch 5, dadurch gekennzeichnet, daß die Erzeugungsmittel (GSS) für das zusätzliche Signal von einem kohärenten Zwischenfrequenzoszillator (OC) gebildet werden, der im Radar enthalten ist und als Bezugsphase (REF) für den Phasendetektor (DP) dient, und daß die Mittel zur Regelung der Amplitude und der Phase (RA, RP) an einen Verstärkungseingang des Phasendetektors (DP) vorzugsweise über einen Unterbrecher (IN) angeschlossen sind.

7. System nach Anspruch 5 oder 6, dadurch gekennzeichnet, daß die Wandlermittel zwei Analog-Digital-Wandler (CI, CQ) sind, die die Videosignale (I bzw. Q) empfangen.

8. System nach einem beliebigen der Ansprüche 5 bis 7, dadurch gekennzeichnet, daß die Meßmittel Mittel (CTS) zur Analyse aufweisen, die an die Wandlermittel (CI, CQ) angeschlossen sind, um frequenzmäßig die digitalen Signale zu analysieren, die von den Videospannungssignalen abgeleitet sind.

## Claims

1. Process for measuring the transmission-reception amplitude stability and phase stability of a radar (RAD) comprising a first step during which voltage signals (I, Q) leaving the phase detector (DP) of the radar receiver (RE) are measured at given instants (IM) at which the said signals are liable to undergo fluctuations, the said signals arising from a signal reflected by a fixed target (CF) and received by the radar, characterized in that the said process comprises a second step during which an additional signal (SS) with preset phase and preset amplitude so as substantially to cancel, at the said given instants, the stable parts of the voltage signals (I, Q) is superimposed on the said received signal (SR) upstream of the phase detector of the receiver (RE), and a third step for measuring the fluctuations of the voltage signals thus received at the said given instants (IM).

2. Process according to Claim 1, characterized in that the additional signal (SS) is a pulsed or sustained signal, at the intermediate frequency of the radar or at the transmission frequency of the radar.

3. Process according to Claim 1 or 2, characterized in that, during the first step, the amplifying gain of the radar receiver (RE) is adjusted so that the said voltage signals do not undergo any voltage limitation.

4. Process according to any one of Claim 1 to 3, characterized in that the measurements of voltage signals (I, Q) during the first and second steps and their utilisation are carried out in the time domain or in the frequency domain.

5. System for measuring the transmission-reception stability of a radar for the implementation of the process according to any one of Claims 1 to 4, the said radar comprising a received signal receiver (RE) producing two quadrature video voltage signals (I, Q) heading for a fixed target digital suppressor (SP) and heading for analog/digital conversion means (CI, CQ) and means for measuring the said voltage signals contained within the system, characterized in that it comprises production means (GSS) and amplitude and phase adjustment means (RA, RP) connected following the production means in order to produce the additional signal (SS) during the second step, and means for applying the said additional signal to a received signal input (SR) of the radar receiver (RE).

6. System according to Claim 5, characterized in that the production means (GSS) consist of an intermediate-frequency coherent oscillator (OC) contained within the radar and serving as phase reference (REF) for the phase detector (DP), and in that the amplitude and phase adjustment means (RA, RP) are connected to an amplifying input of the phase detector (DP), preferably across a breaker (IN).

7. System according to Claim 5 or 6, characterized in that the conversion means are two analog/digital converters (CI, CQ) receiving the video voltage signals (I, Q) respectively.

8. System according to any one of Claims 5 to 7, characterized in that the measuring means comprise analysis means (CTS) connected to the conversion means (CI, CQ) for frequency-domain analysis of the digital signals arising from the said video voltage signals.
